# FASCICULE DE BREVET EUROPEEN

(11) **EP 3 395 771 B1**
(45) Date de publication et mention de la délivrance du brevet: **12.01.2022**
(21) Numéro de dépôt: 18159266.8
(22) Date de dépôt: 28.02.2018
(51) Int. Cl.: C02F 11/06, F23J 15/02, F23G 5/40, F23G 7/00

(54) **INSTALLATION COMPACTE POUR L'INCINERATION DE BOUES**
KOMPAKTE ANLAGE FÜR DIE VERBRENNUNG VON SCHLÄMMEN
COMPACT INSTALLATION FOR SLUDGE INCINERATION

(30) Priorité: 28.04.2017 FR 1753725
(43) Date de publication de la demande: 31.10.2018
(73) Titulaire: F.M.I. Process S.A., 42152 L'Horme (FR)
(72) Inventeur: FIGUERAS, Michel, 69007 LYON (FR)
(74) Mandataire: Cabinet Laurent & Charras

(56) Documents cités:
- EP-A1- 2 784 389
- EP-A2- 2 194 324
- WO-A2-2010/057713
- DE-A1- 3 520 819
- DE-U1-202014 008 440
- JP-A- 2000 240 932
- US-A1- 2014 057 221

## Description

### Domaine technique

La présente invention concerne le domaine technique du traitement des boues par calcination, combustion ou oxydation.

Plus particulièrement, la présente invention a pour objet un kit pour l'incinération de boues comprenant différents modules ainsi que l'installation compacte obtenue en associant les différents modules.

### Etat de la technique

Dans la suite de la description et dans les revendications, on désigne par boues, des boues d'origines diverses telles que par exemple des boues alimentaires, des boues de papeterie, des boues de sidérurgie, des boues de teinturerie ou encore des boues de traitement des eaux usées.

Dans la suite de la description, l'invention est plus particulièrement décrite en relation avec le traitement des boues provenant des eaux usées, bien que ça ne soit pas limitatif.

Le traitement des eaux usées génère la production d'une quantité considérable de boues résiduaires. En effet, la production de boues augmente d'années en années, en raison notamment de la croissance démographique et de la surconsommation. L'élimination de ces boues représente une réelle problématique dans la gestion des stations d'épuration, d'autant plus que la réglementation en la matière impose de nombreuses normes.

Il existe différentes solutions pour traiter les boues. Ainsi, leur élimination est effectuée notamment soit par épandage agricole, soit par mise en décharge, soit par incinération...

L'épandage agricole est le principal mode d'élimination des boues qui sont ainsi valorisées. Cependant, cette pratique se heurte à des défis de plus en plus importants. En effet, la présence de métaux et de micropolluants chimiques (antibiotiques, bisphénol, hormone de synthèse...) dans les boues rend leur valorisation agricole de plus en plus délicate en raison de problèmes de toxicités liés à ceux-ci.

La mise en décharge des boues a tendance à diminuer puisque cette pratique se heurte également à des défis de plus en plus importants. En particulier, les contraintes environnementales comme le transport, les conditions techniques de stockage et les odeurs désagréables rendent coûteuse et délicate la mise en décharge des boues.

L'incinération des boues constitue aujourd'hui l'alternative la plus prometteuse. Cependant, la construction d'une unité de traitement des boues par incinération sur site présente un coût relativement élevé qui ne se justifie que si la quantité de boue à traiter est importante. En pratique, une telle installation fonctionne à raison de 1 à 5 tonnes/heure, en fonction du volume à traiter.

Du fait du coût élevé engendré, les solutions d'incinération classiques ne présentent pas une rentabilité satisfaisante lorsqu'il s'agit de traiter un volume de boue plus faible. Or, il s'avère que les petites villes produisent des quantités de boue de l'ordre de 500 kg/heure, ce qui ne justifie pas l'investissement dans une installation d'incinération.

Le document WO 2010/057713 A1 décrit un système d'incinération de boue comprenant une unité combinant un four et un refroidisseur, et une unité de filtration.

Le document US 2014/05722 A1 décrit une installation complexe destinée au recyclage des routes, comprenant plusieurs appareils, tels qu'un cyclone, chacun porté par une remorque.

D'autres documents de l'art antérieur, tels que les documents EP 0 486 860 A2 ou KR 100619506 B1, décrivent des installations complexes pour l'incinération, respectivement, de déchets de type explosif ou de câbles électriques. Ces systèmes comprennent plusieurs appareils de combustion, un appareil de séchage/pulvérisation de gaz ou encore un cyclone.

Le problème que se propose de résoudre l'invention est celui de fournir une solution de traitement de boues par incinération qui soit adaptée aux petites stations d'épuration, dont le débit est de l'ordre de 500 kg par heure.

Un autre objectif est de fournir un système de traitement de boues à moindre coûts d'installation et de fonctionnement.

### Exposé de l'invention

Pour résoudre le problème posé, le demandeur a mis au point un kit pour l'incinération de boues qui comprend différents modules qui sont destinés à être assemblés sur le site de la station d'épuration de manière simple et rapide sans nécessiter d'équipement préalable sur site mis à part l'eau, l'électricité et le cas échéant les combustibles d'appoint tel que gaz naturel. Le kit selon l'invention permet de traiter les boues en autonomie, sur un site proche du lieu de production, en extérieur. L'incinération permet en outre de diminuer les inconvénients liés au transport des boues qui n'est plus limité qu'à celui des cendres.

L'installation compacte obtenue par assemblage des différents éléments du kit permet de traiter les boues avec une rentabilité satisfaisante même en faible quantité. Bien entendu, l'installation selon l'invention respecte les diverses normes réglementaires relatives à l'incinération des boues.

Ainsi, l'invention concerne un kit pour l'incinération de boues selon l'objet de la revendication

En pratique, chaque enceinte comprend, avantageusement est constituée, de parois latérales ainsi que d'un plafond et d'un fond.

Selon l'invention, le module A se présente sous la forme d'une enceinte A indépendante comprenant un four, des moyens d'alimentation du four en boues à incinérer, des moyens thermiques du four et des moyens d'évacuation des fumées.

Selon l'invention, le four est un four à lit fluidisé. La technologie à lit fluidisé est particulièrement bien adaptée à la combustion des boues. En effet, le lit fluidisé, formé du mélange des boues à traiter et de matériaux inertes sous forme de grains ou de particules (sable siliceux par exemple), assure une répartition optimale de la boue dans la zone de combustion. A noter que les normes législatives, notamment en France, imposent que la boue à traiter réside dans le four pendant au moins 2 secondes à une température d'au moins 850°C afin d'assurer une bonne combustion.

Selon l'invention, le module B se présente sous la forme d'une enceinte B indépendante comprenant des moyens de refroidissement des fumées provenant du module A.

En pratique, les moyens de refroidissement comprennent deux échangeurs de chaleur.

Les échangeurs de chaleur permettent de diminuer la température des fumées évacuées par le four tout en récupérant les calories contenues dans les fumées pour les valoriser.

Selon l'invention, le premier échangeur de chaleur est un échangeur de type air /air qui permet le transfert des calories contenues dans les fumées issues de la combustion des boues dans le four. L'air réchauffé est ensuite avantageusement insufflé dans le four du module A pour générer le lit fluidisé. Il sert également de comburant pour la combustion. Grâce à cette récupération de chaleur, le besoin en combustible (gaz, fioul, ...) est diminué.

En d'autres termes et plus précisément, les moyens de refroidissement comprennent un premier échangeur air / air muni :
- d'une entrée des fumées chaudes,
- d'une sortie des fumées refroidies,
- d'une entrée d'air froid connectée à un surpresseur localisé à l'extérieur du module B,
- d'une sortie d'air réchauffé.

Selon l'invention, le second échangeur de chaleur est un échangeur de type air /liquide qui permet le transfert des calories contenues dans les fumées issues de la combustion des boues dans le four vers un fluide caloporteur. Avantageusement, le fluide caloporteur est de l'eau, du mono propylène glycol (mpg) ou encore de l'huile. L'avantage d'utiliser ce type d'échangeur est d'assurer une production de chaleur en vue d'une utilisation ultérieure dans un réseau de distribution de chaleur pour des besoins de chauffage ou de procédé par exemple.

En d'autres termes et plus précisément, les moyens de refroidissement comprennent un second échangeur air / liquide muni :
- d'une entrée des fumées chaudes,
- d'une sortie des fumées refroidies,
- d'une entrée de fluide caloporteur froid,
- d'une sortie de fluide caloporteur réchauffé.

Dans l'hypothèse où le réseau de distribution de chaleur récupérant la chaleur des fumées n'est pas en service, quelle qu'en soit la raison, la chaleur provenant des fumées doit pour autant être évacuée.

Pour permettre l'évacuation de chaleur, les entrée et sortie de fluide caloporteur sont avantageusement reliées à un aéroréfrigérant.

Selon l'invention, les moyens de refroidissement comprennent les deux échangeurs de chaleur ci avant décrits, respectivement un premier échangeur air/air puis un second échangeur air/liquide.

Le second échangeur de chaleur permet de continuer à abaisser la température des fumées afin de procéder à la suite du traitement.

Selon l'invention, le module C se présente sous la forme d'une enceinte C indépendante comprenant des moyens de filtration des fumées refroidies, des moyens d'évacuation des fumées filtrées, des moyens de stockage, des moyens de conditionnement et des moyens d'évacuation des cendres issues de la filtration,

En pratique, les moyens de filtration des fumées se présentent sous la forme d'un filtre dépoussiéreur, lequel est connecté à une cheminée d'évacuation des gaz traités.

Selon une autre caractéristique, les moyens de stockage des cendres issues de la filtration se présentent sous la forme d'une trémie localisée sous les moyens de filtration, la trémie étant équipée d'au moins 1, avantageusement de 2 sorties des cendres.

Dans un mode de réalisation particulier, les moyens de conditionnement et les moyens d'évacuation des cendres issues de la filtration ne font qu'un et se présentent sous la forme de sacs, avantageusement deux sacs.

Une fois les sacs remplis, les cendres sont évacuées en décharge ou dans des filières de valorisation.

Dans un autre mode de réalisation, les moyens d'évacuation se présentent sous la forme d'un transfert pneumatique des cendres en vrac vers des moyens de conditionnement, sous la forme de silos.

Selon l'invention, les moyens de connexion démontables destinés à connecter les moyens d'évacuation des fumées du module A avec les moyens de refroidissement des fumées du module B, et ceux destinés à connecter les moyens de refroidissement des fumées du module B avec les moyens de filtration des fumées refroidies du module C se présentent sous la forme de tuyaux.

L'encombrement des modules est limité est chacun d'entre eux peut être transporté par camion. En pratique, chaque module à une hauteur comprise entre 6 et 10 mètres, avantageusement égale à 7.5 mètres et une largeur et une longueur comprise entre 2 et 5 mètres

L'invention a également pour objet une installation pour l'incinération de boues obtenue par assemblage des modules A, B et C et connexions, avantageusement démontables correspondantes du kit tel que décrit ci-avant.

L'installation obtenu présente une longueur au sol comprise entre 10 m et 18 m, de préférence de l'ordre de 15 m, une largeur au sol comprise entre 8 m et 13 m, de préférence de l'ordre de 9 m et une hauteur comprise entre 6 m et 10 m, de préférence de l'ordre de 7,5 m. Ainsi, la surface totale occupée par l'installation est de l'ordre de 150 m²

### Brève description des figures

D'autres caractéristiques et avantages de l'invention ressortiront clairement de la description qui est faite ci-après, à titre indicatif et nullement limitatif, en référence aux figures annexées, dans lesquelles :
- la figure 1 est une représentation en coupe de l'installation de l'invention après connexion, avantageusement démontable entre eux des trois modules (A, B et C) du kit.
- la figure 2 est une représentation schématique du module B vue de dessus et en coupe selon l'axe A-A de la figure 1.
- la figure 3 est une représentation schématique du module C vue de dessus selon l'axe B-B de la figure 1.
- la figure 4 est une représentation schématique du module C vue de dessus selon l'axe C-C de la figurel.

### Exposé détaillé de l'invention

Le kit de l'invention est plus particulièrement destiné à équiper des stations d'épuration de petites et moyennes villes.

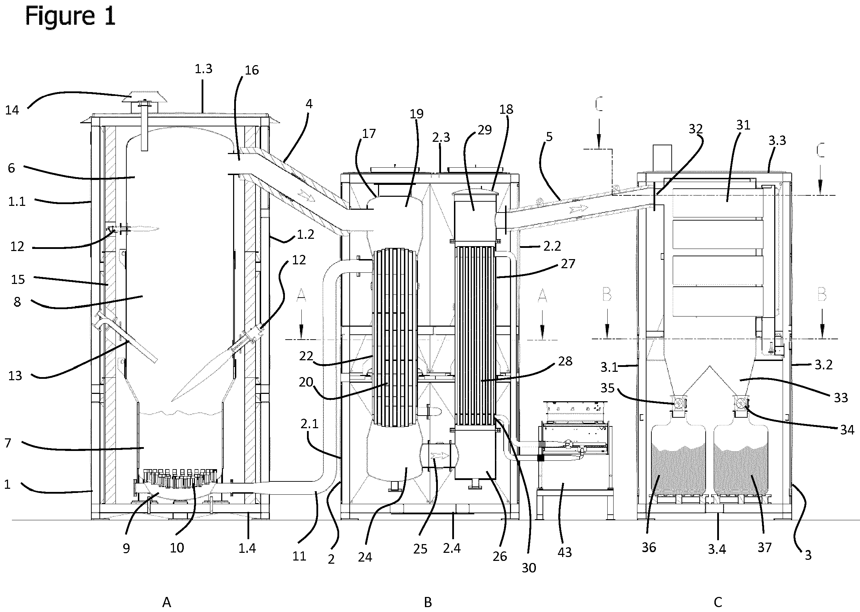

La figure 1 représente l'installation compacte issue du kit selon l'invention dans laquelle 3 modules distincts (A, B et C) sont reliés par des tuyauteries. Les 3 modules se présentent chacun sous la forme d'une enceinte parallélépipédique (1, 2 et 3) comprenant 4 parois latérales, 1 plafond et un fond. Le module A est relié au module B par une tuyauterie démontable (4) tandis que le module C est relié au module B par une tuyauterie démontable (5). L'installation compacte de la figure 1 peut s'intégrer dans un environnement assez restreint compte tenu de sa faible surface utile d'environ 150m².

Bien que non représenté, l'installation peut en outre comprendre un local de contrôle. Le local de contrôle comporte un ordinateur de contrôle de l'incinération des déchets, ainsi que des armoires électriques. En fonction de l'implantation de l'installation, ce local peut être intégré directement dans un bâtiment déjà existant de la station d'épuration.

Le module A est destiné à l'incinération proprement dite des boues. Il comporte un four (6) d'oxydation à lit fluidisé. Ledit four (6) est agencé à l'intérieur de l'enceinte (1) et constitue la majeure partie du volume du module A. L'enceinte est munie de 4 parois latérales dont 2 sont représentées (1.1 et 1.2) ainsi que d'un plafond (1.3) et d'un fond (1.4). Le four est séparé des 4 parois latérales (1.1 et 1.2) de l'enceinte par une isolation latérale (15) permettant une évacuation aisée du four lors d'une quelconque opération.

Le four (6) est constitué d'une cuve verticale de révolution réalisée en acier réfractaire. Le four comporte une zone de confinement pour le lit fluidisé (7), lequel est formé d'un mélange de boues à traiter et de matériaux inertes, tels que, par exemple, du sable. Le lit fluidisé (7), qui s'établit sur une hauteur plus ou moins importante à l'intérieur du four (6), ouvre sur une zone de postcombustion (8) pour les gaz et fumées. Le four (6) comporte également un fond (9) où sont réparties de manière homogène des buses de fluidisation (10). Les buses de fluidisation (10) sont alimentées en gaz comburant sous pression par une canalisation (11) provenant du module B comme il sera vu par la suite. Cette canalisation (11) traverse à la fois la paroi (1.2) du module A et la paroi isolante (15). Le four (6) comporte également des moyens de chauffage du lit fluidisé à une température donnée de combustion. Les moyens de chauffage sont des brûleurs (12) positionnés de manière à démarrer rapidement le four (6) et à réguler la température de 850°C des gaz de combustion. Un système de régulation (14) est prévu au sommet du four et permet de limiter la température en haut du four (6).

Le four (6) comporte également des moyens d'alimentation en boues sous la forme d'une canne d'injection (13), traversant la paroi latérale (1.1) du module A et débouchant à l'intérieur du four (6) au-dessus du lit fluidisé (7). Ainsi, l'alimentation en boue se fait depuis l'extérieur du module A.

Le four présente en outre une ouverture (16) à travers laquelle sont évacuées les fumées vers le module B. Pour ce faire, l'ouverture (16) est connectée au module B par le biais de la tuyauterie démontable (4), laquelle traverse la paroi (1.2) du module A.

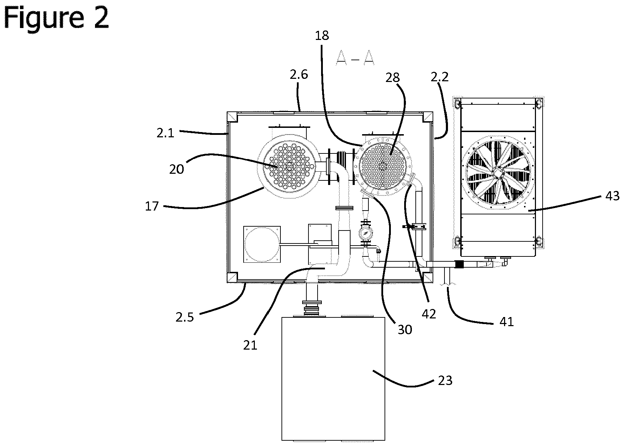

Le module B tel que représenté sur les figures 1 et 2 est destiné à assurer le refroidissement des fumées tout en récupérant l'énergie produite. Il se présente sous la forme d'une enceinte munie de 4 parois latérales (2.1, 2.2, 2.5 et 2.6) ainsi que d'un plafond (2.3) et d'un fond (2.4).

Le module B est équipé de deux échangeurs de chaleur (17, 18) qui permettent la récupération d'énergie.

Le premier échangeur (17) est un échangeur air/air. Il est découpé en trois parties. La tête (19) reçoit les fumées issues du four (6) par la tuyauterie démontable (4), laquelle traverse la paroi (2.1). Les fumées circulent alors dans le corps (22) de l'échangeur (17) via un faisceau tubulaire (20) permettant un échange de chaleur avec de l'air froid circulant à contrecourant. L'alimentation en air froid est effectuée par le biais d'une tuyauterie (21) traversant la paroi (2.5), telle que représenté dans la figure 2 et débouchant au niveau de la partie basse du corps (22). La tuyauterie (21) est elle-même connectée à un surpresseur (23). L'air réchauffé par échange avec les fumées est ainsi refoulé dans la canalisation (11) connectée aux buses de fluidisation (10). Cet air permet de fluidiser le lit de particules dans le four et sert également de comburant pour la combustion.

Le premier échangeur de chaleur (17) est relié via son fond (24) à un second échangeur de chaleur (18) par le biais d'une canalisation (25). Le second échangeur (18) est un échangeur air/liquide. Ainsi, les fumées sortantes de l'échangeur (17) qui ont été partiellement refroidies entrent par la partie basse (26) de l'échangeur (18). Les fumées circulent alors dans le corps (27) de l'échangeur (18) via un faisceau tubulaire (28) de bas en haut permettant un échange de chaleur avec de l'eau froide circulant à contrecourant. Les fumées refroidies sont ensuite évacuées en direction du module C depuis la tête (29) du second échangeur (18) par le biais de la canalisation (5), laquelle traverse la paroi (2.2) du module B.

Comme représenté à la figure 2, l'eau est introduite dans le second échangeur (18) via une entrée (30) et est évacuée par l'intermédiaire d'une sortie (42). La sortie (42) est raccordée à un circuit d'eau externe (41) au module B non représenté. Ce circuit d'eau externe permet d'alimenter, à titre d'exemple, un réseau de chauffage. Tel que représenté à la figure 2, la sortie (42) est reliée à un aéroréfrigérant (43).

Le module C tel que représenté sur les figures 1, 3 et 4 est destinée à assurer la filtration des fumées, leur évacuation ainsi que celle des cendres.

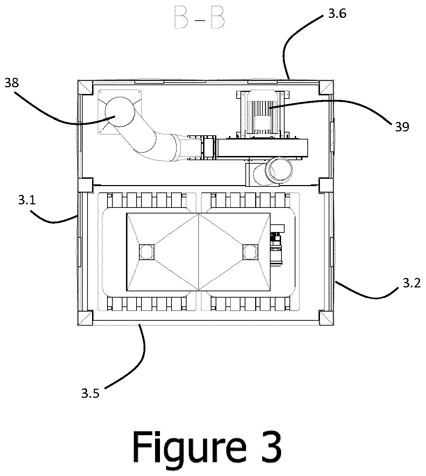

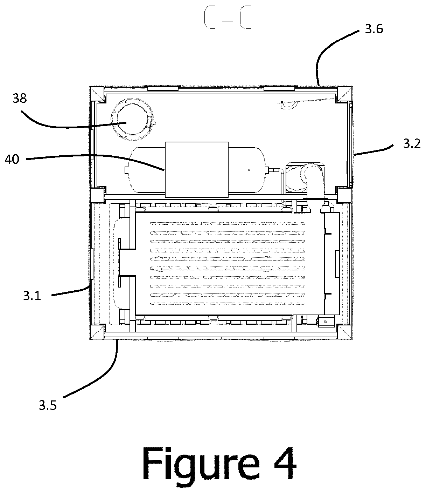

Il se présente sous la forme d'une enceinte munie de 4 parois latérales (3.1, 3.2, 3.5 et 3.6) ainsi que d'un plafond (3.3) et d'un fond (3.4). Il comporte un filtre dépoussiéreur (31) dont la partie supérieure présente une ouverture (32) connectée à la tuyauterie d'alimentation (5) en fumée refroidies, laquelle traverse la paroi (3.1). Les gaz contenus dans les fumées sont séparés des cendres dans le filtre (31). Les cendres sont ensuite stockées dans une trémie (33) munies de 2 sorties (34, 35) munie chacune d'une vanne. Deux grands récipients à vrac souples (36, 37) placés en dessous des sorties (34, 35) de la trémie permettent le conditionnement et l'évacuation des cendres issues de la combustion. Le filtre (31) est connecté à une cheminée (38) d'évacuation des gaz. Comme visible sur la figure 3, un ventilateur extracteur (39) est positionné sur le conduit d'évacuation des gaz (38). Le ventilateur (39) permet d'aspirer les fumées depuis le four (6), de manière à ce que les fumées passent à travers le module B puis le module C. Comme indiqué sur la figure 4, un compresseur d'air (40) est relié au filtre dépoussiéreur (31) pour le décolmater. Dans certains cas, il peut être avantageux d'injecter des réactifs dans le module C. De préférence, les réactifs sont injectés à l'aide d'un conduit à venturi (non représenté) placé dans la conduite (5) qui permet le transfert des fumées du module B vers le module C.

L'installation compacte obtenue à l'issue de l'assemblage des différents éléments du kit présente un encombrement relativement limité (environ 150m²). De manière à faciliter la maintenance des équipements, des accès peuvent être ajoutés. Les branchements d'une telle installation sont également simplifiés par rapport aux systèmes existants puisque d'un point de vue alimentation, seules sont nécessaires des alimentations en boue, en électricité et en combustible d'appoint (gaz).

Chaque module a une taille d'environ 7,5 mètres de haut et 2 à 5 mètres de large. Un tel dimensionnement permet de pouvoir transporter les modules par camion. L'assemblage de l'ensemble peut être facilement effectué en 1 à 2 mois de sorte que l'installation soit rapidement opérationnelle.

## Revendications

1. Kit pour l'incinération de boues comprenant les modules successifs suivants, chaque module comprend des parois latérales, un plafond et un fond :
- un module A (1) se présentant sous la forme d'une enceinte A (1) indépendante comprenant un four à lit fluidisé (6), des moyens d'alimentation (13) du four à lit fluidisé en boues à incinérer, des moyens thermiques du four à lit fluidisé et des moyens d'évacuation des fumées (4),
- un module B se présentant sous la forme d'une enceinte B indépendante comprenant des moyens de refroidissement des fumées (17,18) provenant du module A, lesdits moyens de refroidissement (17,18) comprennent successivement :
o au moins un échangeur de chaleur, ledit échangeur étant un échangeur air / air (17) muni :
- d'une entrée des fumées chaudes (4),
- d'une sortie des fumées refroidies (25),
- d'une entrée d'air froid (21) connectée à un surpresseur (23) localisé à l'extérieur du module B,
- d'une sortie d'air réchauffé (11); et
o un échangeur air / liquide (18) muni :
- d'une entrée des fumées refroidies provenant de l'échangeur fumée / air (25),
- d'une sortie des fumées froides (5),
- d'une entrée de fluide caloporteur froid (30),
- d'une sortie de fluide caloporteur réchauffé (42).
- un module C se présentant sous la forme d'une enceinte C indépendante comprenant des moyens de filtration (31) des fumées refroidies, des moyens d'évacuation (38, 39) des fumées filtrées, des moyens de stockage et des moyens d'évacuation des cendres issues de la filtration (36, 37),
- des moyens de connexion démontables destinés à connecter les moyens d'évacuation des fumées du module A avec les moyens de refroidissement des fumées du module B (2),
- des moyens de connexion démontables destinés à connecter les moyens de refroidissement des fumées du module B avec les moyens de filtration des fumées refroidies du module C (3), et, en outre,
- des moyens de connexion démontables destinés à connecter la sortie d'air réchauffé (11) au four à lit fluidisé (6) pour l'alimenter en air comburant,
- les moyens de connexion démontables se présentent sous la forme de tuyaux, le module A étant relié au module B par une tuyauterie démontable (4) tandis que le module C est relié au module B par une tuyauterie démontable (5).

2. Kit selon la revendication 1, **caractérisé en ce que** les entrée et sortie de fluide caloporteur (30, 42) sont reliées à un aéroréfrigérant (43).

3. Kit selon l'une des revendications précédentes, **caractérisé en ce que** les moyens de stockage des cendres (36, 37) issues de la filtration se présentent sous la forme d'une trémie localisée sous les moyens de filtration (31), la trémie étant équipée d'au moins 1, avantageusement de 2 sorties des cendres (34, 35).

4. Kit selon l'une des revendications précédentes, **caractérisé en ce que** les moyens d'évacuation des cendres issues de la filtration (36, 37) se présentent sous la forme de sacs, avantageusement deux sacs.

5. Kit selon l'une des revendications précédentes, **caractérisé en ce que** chaque module à une hauteur comprise entre 6 et 10 mètres, avantageusement égale à 7.5 mètres et une largeur et une longueur comprise entre 2 et 5 mètres.

6. Installation pour l'incinération de boues obtenue par assemblage des modules A, B et C et connexions démontables correspondantes du kit selon l'une des revendications précédentes.

## Patentansprüche

1. Bausatz zur Verbrennung von Schlämmen, der die nachstehenden aufeinander folgenden Module enthält, jedes Modul enthält Seitenwände, eine Decke und einen Boden
- ein Modul A (1), das die Form eines unabhängigen Gehäuses A (1) hat, mit einem Wirbelschichtofen (6), Vorrichtungen (13) zur Beschickung des Wirbelschichtofens mit zu verbrennendem Schlamm, den thermischen Vorrichtungen des Wirbelschichtofens und Vorrichtungen zur Rauchgasableitung (4),
- ein Modul B, das die Form eines unabhängigen Gehäuses B hat, mit Vorrichtungen zur Abkühlung der Rauchgase (17,18) aus dem Modul A, diese Kühlvorrichtungen (17,18) umfassen aufeinander folgend
o mindestens einen Wärmetauscher, bei diesem Wärmetauscher handelt es sich um einen Luft- / Lufttauscher (17), der ausgerüstet ist mit
- einem Einlass für heiße Rauchgase (4),
- einem Auslass für abgekühlte Rauchgase (25),
- einem Einlass für kalte Luft (21), verbunden mit einem Nachverdichter (23), untergebracht außerhalb des Moduls B,
- einem Auslass für erwärmte Luft (11); und
o einen Luft- / Flüssigkeitswärmetauscher (18) ausgerüstet mit
- einem Einlass für die abgekühlten Rauchgase aus dem Rauchgas-/ Luft- Tauscher (25),
- einem Einlass für kalte Rauchgase (5),
- einem Einlass für kaltes Wärmeträgerfluid (30),
- einem Auslass für erwärmtes Wärmeträgerfluid (42).
- ein Modul C, das die Form eines unabhängigen Gehäuses C hat, mit Vorrichtungen zur Filterung (31) des abgekühlten Rauchgases, Vorrichtungen zur Ableitung (38, 39) der gefilterten Rauchgase, Lagervorrichtungen und Vorrichtungen zur Entfernung der Asche aus der Filterung (36, 37),
- demontierbare Verbindungsvorrichtung zur Verbindung der Rauchgasableitungsvorrichtungen des Moduls A mit den Rauchgaskühlvorrichtungen des Moduls B (2),
- demontierbare Verbindungsvorrichtung zur Verbindung der Rauchgaskühlvorrichtungen des Moduls B mit den Filtervorrichtungen des gekühlten Rauchgases des Moduls C (3), und außerdem,
- demontierbare Verbindungsvorrichtung zur Verbindung des Warmluftauslasses (11) mit dem Wirbelschichtofen (6) um ihn mit Verbrennungsluft zu versorgen.
- die demontierbaren Verbindungsvorrichtungen haben die Form von Rohrleitungen, das Modul A ist dabei mit dem Modul B über eine demontierbare Rohrleitung (4) verbunden, während das Modul C mit dem Modul B über eine demontierbare Rohrleitung (5) verbunden ist.

2. Bausatz nach Anspruch 1, **dadurch gekennzeichnet, dass** der Einlass und der Auslass der Wärmeträgerflüssigkeit (30, 42) mit einem Trockenkühler (43) verbunden sind.

3. Bausatz nach einem der vorhergehenden Ansprüche, **dadurch gekennzeichnet, dass** die Lagervorrichtungen (36, 37) für Asche aus der Filterung die Form eines Trichters haben, untergebracht unter den Filtervorrichtungen (31), der Trichter ist mit mindestens 1, besser noch 2 Ascheauslässen (34, 35) ausgerüstet.

4. Bausatz nach einem der vorhergehenden Ansprüche, **dadurch gekennzeichnet, dass** Vorrichtungen zur Beseitigung der Asche aus der Filterung (36, 37) die Form von Beuteln haben, vorzugsweise zwei Beutel.

5. Bausatz nach einem der vorhergehenden Ansprüche, **dadurch gekennzeichnet, dass** jedes Modul eine Höhe zwischen 6 und 10 Metern hat, vorzugsweise gleich 7.5 Meter und eine Breite zwischen 2 und 5 Metern.

6. Anlage zur Verbrennung von Schlämmen, als Ergebnis des Zusammenbaus der Module A, B und C und demontierbarer Verbindungen entsprechend dem Bausatz nach einem der vorangehenden Ansprüche.

## Claims

1. Kit for sludge incineration comprising following successive modules, each module comprises lateral walls, a ceiling and a bottom:
- a module A (1) being presented in the form of an independent chamber A (1) comprising a fluidised bed furnace (6), means for supplying (13) the fluidised bed furnace with sludge to be incinerated, thermal means of the fluidised bed furnace and fume discharge means (4),
- a module B being presented in the form of an independent chamber B comprising means for cooling fumes (17, 18) coming from the module A, said cooling means (17, 18) successively comprise:
o at least one heat exchanger, said exchanged being an air/air exchanger (17) equipped with:
- a hot fume inlet (4),
- a cooled fume outlet (25),
- a cold air inlet (21) connected to a compressor (23) located outside of the module B,
- a heated air outlet (11); and
o an air/liquid exchanger (18) equipped with:
- an inlet for cooled fumes coming from the fume/air exchanger (25),
- a cold fume outlet (5),
- a cold heat-transfer fluid inlet (30),
- a heated heat-transfer fluid outlet (42).
- a module C being presented in the form of an independent chamber C comprising means for filtering (31) cooled fumes, means for discharging (38, 39) filtered fumes, means for storing and means for discharging ash coming from the filtration (36, 37),
- removable connection means intended to connect the fume discharging means of module A with the fume cooling means of module B (2),
- removable connection means intended to connect the fume cooling means of module B with the cooled fume filtration means of module C (3), and, furthermore,
- removable connection means intended to connect the heated air outlet (11) to the fluidised bed furnace (6) to supply it with combustion air,
- the removable connection means are presented in the form of pipes, the module A being connected to the module B by removable pipes (4), while the module C is connected to the module B by removable pipes (5).

2. Kit according to claim 1, **characterised in that** the heat-transfer fluid inlet and outlet (30, 42) are connected to an air cooler (43).

3. Kit according to one of the preceding claims, **characterised in that** the means for storing ash (36, 37) coming from the filtration are presented in the form of a funnel located under the filtration means (31), the funnel being equipped with at least 1, advantageously 2 ash outlets (34, 35).

4. Kit according to one of the preceding claims, **characterised in that** the means for discharging ash coming from the filtration (36, 37) are presented in the form of bags, advantageously two bags.

5. Kit according to one of the preceding claims, **characterised in that** each module at a height comprised between 6 and 10 metres, advantageously equal to 7.5 metres and a width and a length comprised between 2 and 5 metres.

6. Installation for sludge incineration obtained by assembling modules A, B and C and corresponding removable connections of the kit according to one of the preceding claims.
